# EUROPEAN PATENT APPLICATION

(11) **EP 4 738 633 A1**
(43) Date of publication of application: **06.05.2026**
(21) Application number: 23943702.3
(22) Date of filing: 30.06.2023
(51) Int. Cl.: H02G 5/06, H02B 1/20

(54) **SOLID INSULATION BUSBAR CONNECTION DEVICE AND ASSEMBLY METHOD FOR SOLID INSULATION BUSBAR CONNECTION DEVICE**

(71) Applicant: MITSUBISHI ELECTRIC CORPORATION, Chiyoda-ku Tokyo 100-8310 (JP)
(72) Inventor: SASAYAMA, Shohei, Tokyo 100-8310 (JP); NAKAUCHI, Shinichiro, Tokyo 100-8310 (JP); SATO, Koma, Tokyo 100-8310 (JP)
(74) Representative: Witte, Weller & Partner Patentanwälte mbB
(86) International application number: PCT/JP2023/024355
(87) International publication number: WO 2025/004311

(57) **Abstract**

A solid-insulated busbar connector (50) includes a pair of tank connectors (51, 52) attached to two respective electrical devices intended to be connected to each other, and a solid-insulated busbar (30) disposed between the tank connectors (51, 52). The solid-insulated busbar (30) includes vertical busbars (55, 57) each including a first center conductor covered with an electrically insulating resin and each disposed to cause the first center conductor to extend vertically, and a horizontal busbar (56) including a second center conductor covered with an electrically insulating resin and disposed to cause the second center conductor to extend horizontally.

## Description

### Field

The present disclosure relates to a solid-insulated busbar connector for connecting electrical devices to each other and to an assembly method for assembling such solid-insulated busbar connector.

### Background

Electrical devices such as a gas-insulated device are conventionally connected to each other using a method in which a connector is disposed between the electrical devices intended to be connected to each other, where the connector houses a conductor in a tank filled with an electrically insulating gas such as sulfur hexafluoride to insulate the conductor.

Reduction is demanded in recent years from a viewpoint of environmental protection in terms of usage of an insulating gas having a high environmental burden such as sulfur hexafluoride. As such, the connector is demanded to have a configuration that uses no insulating gas having a high environmental burden.

Patent Literature 1 discloses a connector including a straight bar-shaped conductor that is circumferentially covered with a solid sheath. The connector disclosed in Patent Literature 1 is configured such that the straight bar-shaped conductor is circumferentially covered with a solid sheath for insulation, thereby the conductor is insulated without using an insulating gas having a high environmental burden.

### Citation List

### Patent Literature

Patent Literature 1: Japanese Patent Application Laid-open No. 2009-44958

### Summary of Invention

### Problem to be solved by the Invention

The connector disclosed in Patent Literature 1 connects devices intended to be connected to each other, using a single straight bar-shaped conductor. This requires that the two electrical devices intended to be connected to each other be installed at a same height level. However, there may be a case where the two electrical devices cannot be installed at a same height level, and a difference occurs in the height level of the two electrical devices depending on the installation environment of the electrical devices intended to be connected to each other. In such a case, the connector disclosed in Patent Literature 1 fails to connect the two electrical devices intended to be connected to each other.

The present disclosure has been made in view of the foregoing, and it is an object of the present disclosure to provide a solid-insulated busbar connector that allows connection of electrical devices intended to be connected to each other even when the electrical devices intended to be connected to each other are to be installed at different height levels.

### Means to Solve the Problem

To solve the above problems and achieve the object a solid-insulated busbar connector according to the present disclosure includes: a pair of tank connectors to be attached to two respective electrical devices intended to be connected to each other; and a solid-insulated busbar disposed between the tank connectors. The solid-insulated busbar includes: vertical busbars each including a first center conductor covered with an electrically insulating resin each being disposed to cause the first center conductor to extend vertically; and a horizontal busbar including a second center conductor covered with an electrically insulating resin, the horizontal busbar being disposed to cause the second center conductor to extend horizontally

### Effects of the Invention

The present disclosure provides an advantageous effect in providing a solid-insulated busbar connector that allows connection of electrical devices intended to be connected to each other even when the electrical devices intended to be connected to each other are to be installed at different height levels.

### Brief Description of Drawings

FIG. 1 is a cross-sectional view illustrating a configuration of a solid-insulated busbar connector according to a first embodiment.
FIG. 2 is a cross-sectional view illustrating a configuration of vertical busbars of the solid-insulated busbar connector according to the first embodiment.
FIG. 3 is a cross-sectional view illustrating a configuration of a horizontal busbar of the solid-insulated busbar connector according to the first embodiment.
FIG. 4 is a cross-sectional view illustrating a configuration of conductor connectors of the solid-insulated busbar connector according to the first embodiment.
FIG. 5 is a horizontal cross-sectional view of the conductor connectors of the solid-insulated busbar connector according to the first embodiment.
FIG. 6 is a cross-sectional view illustrating a configuration of tank connectors of the solid-insulated busbar connector according to the first embodiment.
FIG. 7 is a cross-sectional view illustrating a configuration of p compressors of the solid-insulated busbar connector according to the first embodiment.
FIG. 8 is a cross-sectional view illustrating a configuration of the solid-insulated busbar connector according to a second embodiment.
FIG. 9 is a cross-sectional view illustrating a configuration of the solid-insulated busbar connector according to a third embodiment.
FIG. 10 is a top view of a multi-contact of the solid-insulated busbar connector according to the third embodiment.
FIG. 11 is a cross-sectional view of the multi-contact of the solid-insulated busbar connector according to the third embodiment.
FIG. 12 is a cross-sectional view of the multi-contact of the solid-insulated busbar connector according to the third embodiment.

### Description of Embodiments

A solid-insulated busbar connector and an assembly method for assembling the solid-insulated busbar connector according to embodiments will be described in detail below with reference to the drawings.

### First Embodiment.

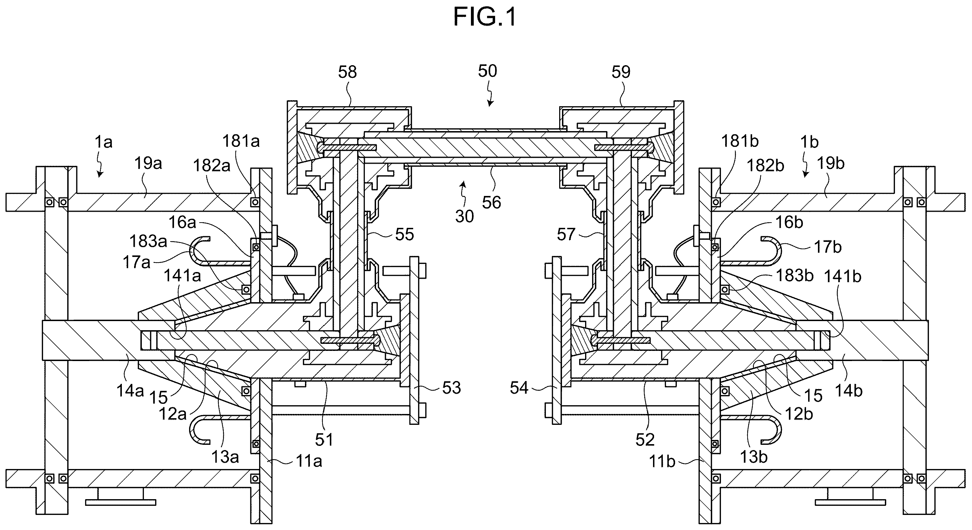

FIG. 1 is a cross-sectional view illustrating a configuration of a solid-insulated busbar connector according to a first embodiment. A solid-insulated busbar connector 50: is installed between a tank 1a of a first electrical device and a tank 1b of a second electrical device; and thus, electrically connects these two components to each other. The solid-insulated busbar connector 50 includes: a tank connector 51 to be attached to the tank 1a of a first electrical device; a tank connector 52 to be attached to the tank 1b of a second electrical device; a compressor53, which presses the tank connector 51 against the tank 1a; a compressor 54, which presses the tank connector 52 against the tank 1b; and a solid-insulated busbar 30 disposed between the tank connector 51 and the tank connector 52. The solid-insulated busbar 30 includes: vertical busbars 55 and 57; a horizontal busbar 56; a conductor connector 58 that joins together the vertical busbar 55 and the horizontal busbar 56; and a conductor connector 59 that joins together the horizontal busbar 56 and the vertical busbar 57. The vertical busbars 55 and 57 are disposed to extend upward from the tank connectors 51 and 52. The horizontal busbar 56 is disposed at a height level above the tank connectors 51 and 52.

The tanks 1a and 1b include, respectively: body units 19a and 19b having a cylindrical shape: tank lid plate flanges 11a and 11b provided in one end portions of the body units 19a and 19b; cup-shaped insulators 13a and 13b; connecting conductors 14a and 14b; and insulator fixing flanges 16a and 16b. The insulator fixing flanges 16a and 16b are fixed in the one end portions of the body units 19a and 19b. The cup-shaped insulators 13a and 13b and electric field-relaxation ring shields 17a and 17b are disposed on the insulator fixing flanges 16a and 16b. O-rings 181a and 181b are placed between the tanks 1a and 1b and the tank lid plate flanges 11a and 11b. O-rings 182a and 182b are placed between the tank lid plate flanges 11a and 11b and the insulator fixing flanges 16a and 16b. O-rings 183a and 183b are placed between the insulator fixing flanges 16a and 16b and the cup-shaped insulators 13a and 13b. This configuration keeps airtight all of the gaps between the tanks 1a and 1b and the tank lid plate flanges 11a and 11b, the gaps between the tank lid plate flanges 11a and 11b and the insulator fixing flanges 16a and 16b, and the gaps between the insulator fixing flanges 16a and 16b and the cup-shaped insulators 13a and 13b. An insulating grease 15 is applied on the cup-shaped insulators 13a and 13b. The cup-shaped insulators 13a and 13b form hollow portions 12a and 12b, which receive the tank connectors 51 and 52 inserted thereinto. In the hollow portions 12a and 12b, the connecting conductors 14a and 14b are disposed in portions that form the bottoms of the cup-shaped insulators 13a and 13b. Holes 141a and 141b are formed in the connecting conductors 14a and 14b.

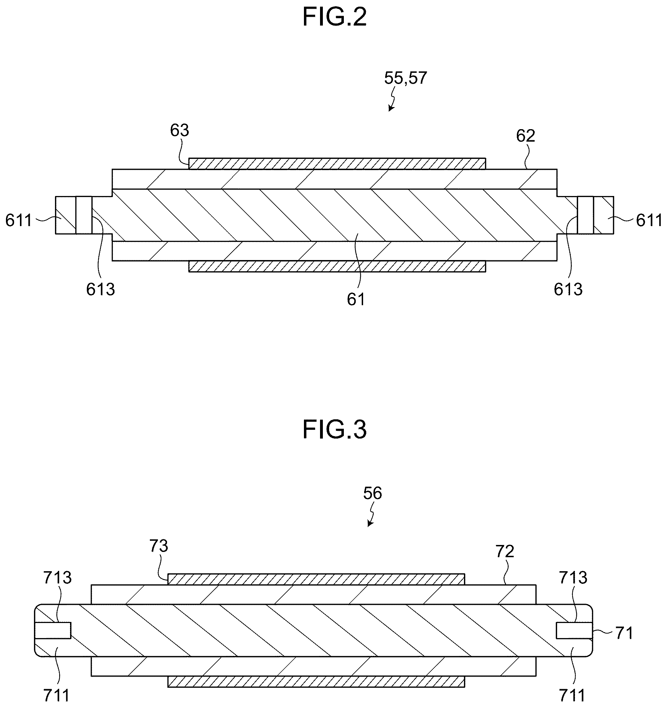

FIG. 2 is a cross-sectional view illustrating a configuration of the vertical busbars of the solid-insulated busbar connector according to the first embodiment. The vertical busbars 55 and 57 each includes: a first center conductor 61 having a straight bar shape; an insulation resin 62 that is an insulating resin element covering the first center conductor 61; and a sheath 63 covering a portion exposed to ambient air, of the insulation resin 62. The sheath 63 is formed of an electrically conductive material, and is connected to the ground for grounding. The first center conductor 61 has end portions 611, which are protruding from the insulation resin 62. The end portions 611 of the first center conductor 61 are each a rounded-corner quadrangular prism portion formed into a rounded-corner quadrangular prism shape. The rounded-corner quadrangular prism portion has a through-hole 613 formed therein, which extends in a direction perpendicular to the axial direction of the first center conductor 61 and penetrates through the first center conductor 61. The vertical busbars 55 and 57 are each disposed to cause the first center conductor 61 to extend vertically.

FIG. 3 is a cross-sectional view illustrating a configuration of the horizontal busbar of the solid-insulated busbar connector according to the first embodiment. The horizontal busbar 56 includes: a second center conductor 71 having a straight bar shape; an insulation resin 72 that is an insulating resin element covering the second center conductor 71; and a sheath 73 covering a portion exposed to ambient air, of the insulation resin 72. The sheath 73 is formed of an electrically conductive material, and is connected to the ground for grounding. The second center conductor 71 has end portions 711 that are protruding from the insulation resin 72. The second center conductor 71 has end faces each having an internal thread 713 formed therein. The horizontal busbar 56 is disposed to cause the second center conductor 71 to extend horizontally.

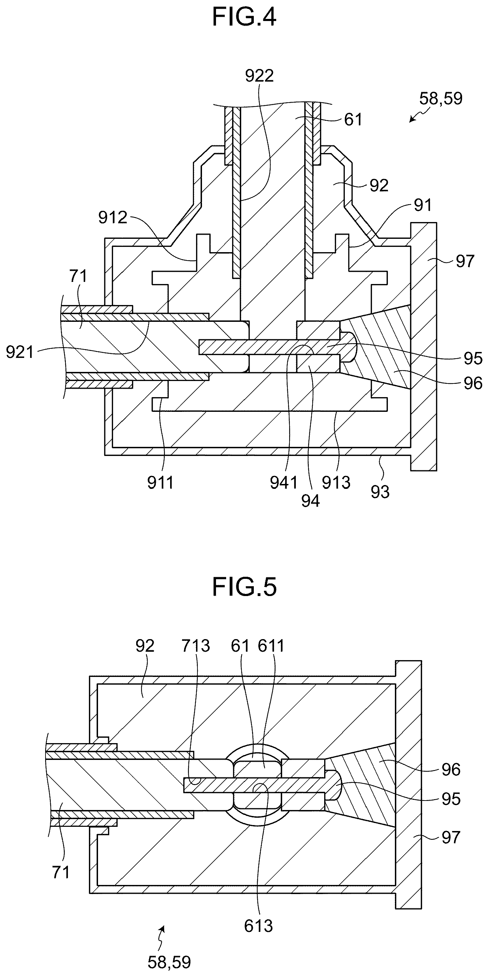

FIG. 4 is a cross-sectional view illustrating a configuration of the conductor connectors of the solid-insulated busbar connector according to the first embodiment. The conductor connectors 58 and 59 each includes: a conductive resin 91 that connects the first center conductor 61 and the second center conductor 71 to each other; an insulation resin 92 covering the conductive resin 91; a sheath 93 covering the insulation resin 92; a fixing metal 94 and a screw 95 for fixing the first center conductor 61, an insulation cap 96 covering the fixing metal 94 and the screw 95, and a conductive cover 97 covering the insulation cap 96.

The conductive resin 91 is a T-shaped element that allows three cylinders to meet each other, and thus includes: a first cylindrical unit 911thatreceives the second center conductor 71 inserted thereinto; a second cylindrical unit 912 that receives the first center conductor 61 inserted thereinto; and a third cylindrical unit 913 in which the fixing metal 94 is disposed. The first cylindrical unit 911 and the third cylindrical unit 913 are arranged coaxially to each other, and the second cylindrical unit 912 is arranged perpendicularly to the first cylindrical unit 911 and to the third cylindrical unit 913.

FIG. 5 is a horizontal cross-sectional view of the conductor connectors of the solid-insulated busbar connector according to the first embodiment. Insertion of the second center conductor 71 into the first cylindrical unit 911 and insertion of the first center conductor 61 into the second cylindrical unit 912 cause the side face of the rounded-corner quadrangular prism of a corresponding one of the end portions 611 of the first center conductor 61 and a corresponding one of the end faces of the second center conductor 71 to come into surface contact with each other. When the second center conductor 71 has been inserted into the first cylindrical unit 911 and the corresponding one of the end portions 611 of the first center conductor 61 has been inserted into the second cylindrical unit 912, the screw 95 is caused to penetrate through the through-hole 613 of the first center conductor 61 and a through-hole 941 of the fixing metal 94, and the screw 95 is then threadably fixed in the internal thread 713. This causes the first center conductor 61 and the second center conductor 71 to be fixed to each other while in surface contact with each other. The insulation cap 96 is attached to the third cylindrical unit 913, and the conductive cover 97 is then further placed, thereby causing the fixing metal 94 and the screw 95 to be insulated from ambient air.

The insulation resin 92 has a hollow portion 921 formed to receive the second center conductor 71 inserted thereinto, and a hollow portion 922 formed to receive the first center conductor 61 inserted thereinto. The hollow portion 921 connects to the first cylindrical unit 911 of the conductive resin 91, and the hollow portion 922 connects to the second cylindrical unit 912 of the conductive resin 91.

The corresponding one of the end faces of the second center conductor 71 is in contact with the side face of the rounded-corner quadrangular prism of the corresponding one of the end portions 611 of the first center conductor 61. That is, the second center conductor 71 and the first center conductor 61 are in surface contact with each other. In addition, the first center conductor 61 and the second center conductor 71 also electrically conduct to each other through the conductive resin 91. Accordingly, the first center conductor 61 and the second center conductor 71 are equipotential, thereby causing no discharge between the first center conductor 61 and the second center conductor 71.

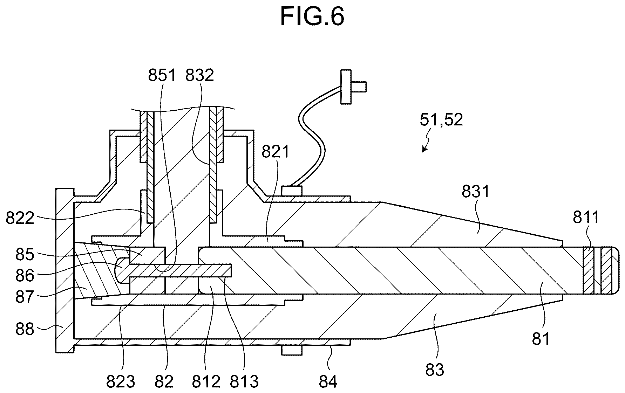

FIG. 6 is a cross-sectional view illustrating a configuration of the tank connectors of the solid-insulated busbar connector according to the first embodiment. The tank connectors 51 and 52 each includes: a third center conductor 81; a conductive resin 82 that connects the third center conductor 81 and the first center conductor 61 to each other; an insulation resin 83 that is an insulating resin element covering the third center conductor 81; a sheath 84 covering a portion exposed to ambient air, of the insulation resin 83; a fixing metal 85 and a screw 86 for fixing the first center conductor 61; an insulation cap 87 covering the fixing metal 85 and the screw 86; and a conductive cover 88 covering the insulation cap 87. The third center conductor 81 has one end portion 811, which is protruding from the insulation resin 83. The one end portion 8111 of the third center conductor 81 is inserted into each corresponding one of the holes 141a and 141b of the connecting conductors 14a and 14b.

The conductive resin 82 is a T-shaped element that allows three cylinders to meet each other, and thus includes: a first cylindrical unit 821 in which another end portion 812 of the third center conductor 81 has been disposed; a second cylindrical unit 822 that receives the first center conductor 61 inserted thereinto; and a third cylindrical unit 823 in which the fixing metal 85 is disposed. The first cylindrical unit 821 and the third cylindrical unit 823 are arranged coaxially to each other, and the second cylindrical unit 822 is arranged perpendicularly to the first cylindrical unit 821 and to the third cylindrical unit 823.

Insertion of the first center conductor 61 into the second cylindrical unit 822 causes the side face of the rounded-corner quadrangular prism of a corresponding one of the end portions 611 of the first center conductor 61 and a corresponding one of the end faces of the third center conductor 81 to come into surface contact with each other. When the corresponding one of the end portions 611 of the first center conductor 61 has been inserted into the second cylindrical unit 822, the screw 86 is caused to penetrate through the through-hole 613 of the first center conductor 61 and a through-hole 851 of the fixing metal 85, and the screw 86 is then threadably fixed in an internal thread 813. This causes the first center conductor 61 and the third center conductor 81 to be fixed to each other while in surface contact with each other. The insulation cap 87 is attached to the third cylindrical unit 823, and the conductive cover 88 is then further placed, thereby causing the fixing metal 85 and the screw 86 to be insulated from ambient air.

The insulation resin 83 has a protruding-shaped portion 831 having a protruding shape corresponding to the hollow shape of the cup-shaped insulators 13a and 13b. The insulation resin 83 also has a hollow portion 832 formed to receive the first center conductor 61 inserted thereinto. The hollow portion 832 connects to the second cylindrical unit 822 of the conductive resin 82.

The corresponding one of the end faces of the third center conductor 81 is in contact with the side face of the rounded-corner quadrangular prism of the corresponding one of the end portions 611 of the first center conductor 61. That is, the first center conductor 61 and the third center conductor 81 are in surface contact with each other. In addition, the first center conductor 61 and the third center conductor 81 also electrically conduct to each other through the conductive resin 82. Accordingly, the first center conductor 61 and the third center conductor 81 are equipotential, thereby causing no discharge between the first center conductor 61 and the third center conductor 81.

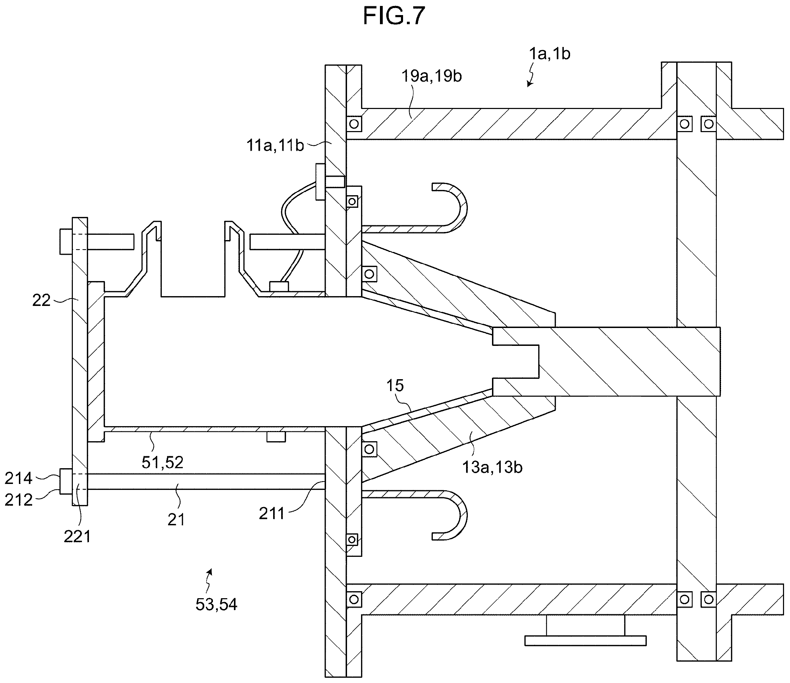

FIG. 7 is a cross-sectional view illustrating a configuration of the compressors of the solid-insulated busbar connector according to the first embodiment. In FIG. 7, illustration of the tank connectors 51 and 52 is partly omitted. The compressors 53 and 54 each includes: a support rod 21 fixed to each corresponding one of the tank lid plate flanges 11a and 11b of the tanks 1a and 1b; and a pressing plate 22 disposed on the support rod 21. The support rod 21 has an end portion 211 on the side where the support rod 21 is fixed to each corresponding one of the tank lid plate flanges 11a and 11b of the tanks 1a and 1b, and has an end portion 212 on a side opposite the end portion 211. The end portion 212 has an external thread formed thereon. The pressing plate 22 has a hole 221 formed to allow the support rod 21 to be inserted therethrough. Passing the end portion 212 of the support rod 21 through the hole 221 and then tightening a nut 214 on the end portion 212 causes each corresponding one of the tank connectors 51 and 52 to be pressed against the corresponding one of the tanks 1a and 1b. Pressing the tank connectors 51 and 52 against the tanks 1a and 1b causes the tank connectors 51 and 52 to be firmly fixed while the protruding-shaped portions 831 of the insulation resins 83 of the respective tank connectors 51 and 52 abut on the cup-shaped insulators 13a and 13b with the insulating grease 15 therebetween.

To install the solid-insulated busbar connector 50, firstly, the vertical busbars 55 and 57 are connected to the horizontal busbar 56 in advance using the conductor connectors 58 and 59 to form the solid-insulated busbar 30. Secondly, the tank connectors 51 and 52 are inserted into the tanks 1a and 1b. Next, the solid-insulated busbar 30 is brought close to the tank connectors 51 and 52 from above, and the first center conductor 61 is inserted into the second cylindrical unit 822. Then, when a corresponding one of the end portions 611 of the first center conductor 61 has been inserted into the second cylindrical unit 822, the screw 86 is caused to penetrate through the through-hole 613 of the first center conductor 61 and the through-hole 851 of the fixing metal 85, and the screw 86 is then threadably fixed in the internal thread 813. After this, the insulation cap 87 is attached to the third cylindrical unit 823, and the conductive cover 88 is then placed. Installation of the solid-insulated busbar connector 50 using the above procedure eliminates a need to support the solid-insulated busbar 30 from below when the solid-insulated busbar 30 is connected to the tank connectors 51 and 52, thereby enabling an easy installation work of the solid-insulated busbar connector 50.

Note that the solid-insulated busbar 30 may be assembled in such a manner that the vertical busbars 55 and 57 of the solid-insulated busbar 30 are connected to the tank connectors 51 and 52 in advance, and the horizontal busbar 56 and the conductor connectors 58 and 59 are then coupled, from above, to the vertical busbars 55 and 57. That is, a portion of the solid-insulated busbar 30 including at least the horizontal busbar 56 and the conductor connectors 58 and 59 is coupled, from above, to the vertical busbars 55 and 57 or to the tank connectors 51 and 52, where the vertical busbars 55 and 57 constitute a portion of the solid-insulated busbar 30 other than the horizontal busbar 56 and the conductor connectors 58 and 59. This eliminates a need to support the solid-insulated busbar 30 from below when the solid-insulated busbar 30 is placed, thereby enabling easy installation work of the solid-insulated busbar connector 50.

The solid-insulated busbar connector according to the first embodiment is configured such that the solid-insulated busbar 30 is disposed between the tank connector 51 connected to the tank 1a and the tank connector 52 connected to the tank 1b. This enables electrical devices installed at different height levels to be connected to each other by using different lengths for the length of the first center conductor 61 of the vertical busbar 55 and the length of the first center conductor 61 of the vertical busbar 57.

### Second Embodiment.

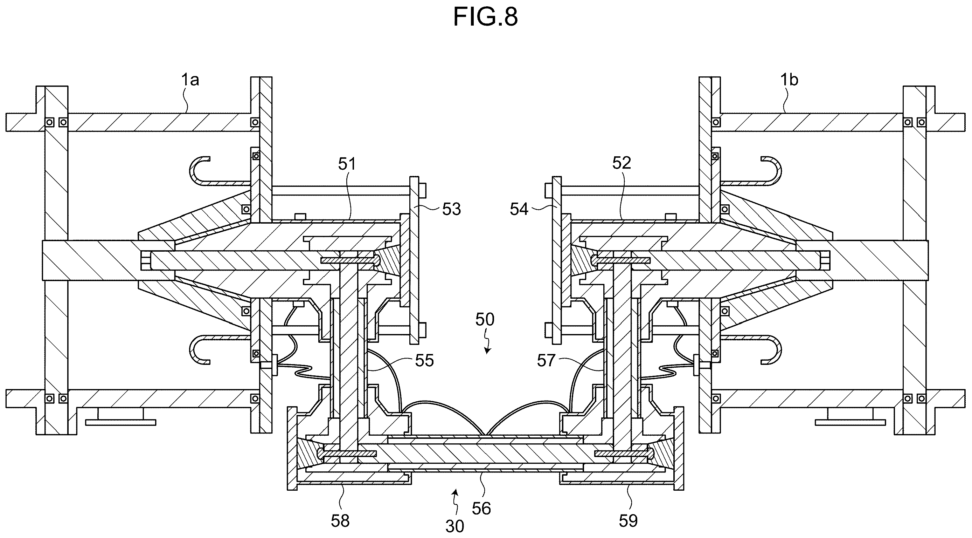

FIG. 8 is a cross-sectional view illustrating a configuration of the solid-insulated busbar connector according to a second embodiment. The solid-insulated busbar connector according to the second embodiment is configured such that the vertical busbars 55 and 57 are disposed to extend downward from the tank connectors 51 and 52, and the horizontal busbar 56 is disposed at a height level below the tank connectors 51 and 52. The other part is similar to the solid-insulated busbar connector 50 according to the first embodiment, and duplicate description thereof will therefore be omitted.

The solid-insulated busbar connector 50 according to the second embodiment is configured such that the horizontal busbar 56 is disposed at a height level below the tank connectors 51 and 52, and can therefore have a center of gravity at a height level lower than that of the solid-insulated busbar connector 50 according to the first embodiment. The solid-insulated busbar connector 50 according to the second embodiment can accordingly be more earthquake-resistant than the solid-insulated busbar connector 50 according to the first embodiment.

### Third Embodiment.

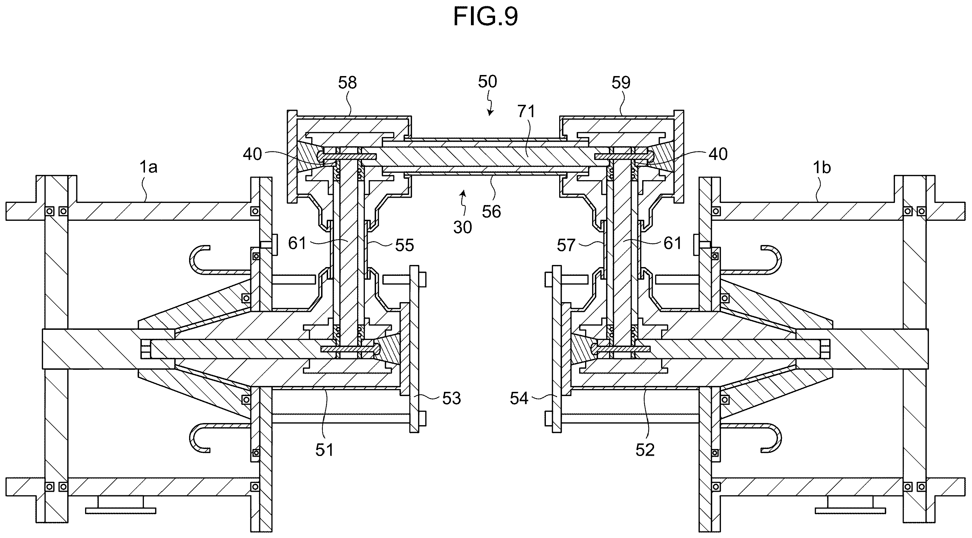

FIG. 9 is a cross-sectional view illustrating a configuration of the solid-insulated busbar connector according to a third embodiment. The solid-insulated busbar connector 50 according to the third embodiment differs from the solid-insulated busbar connector 50 according to the first embodiment in that the conductor connectors 58 and 59 each includes a multi-contact 40, and that the first center conductors 61 and the second center conductor 71 are connected to each other through the multi-contact 40.

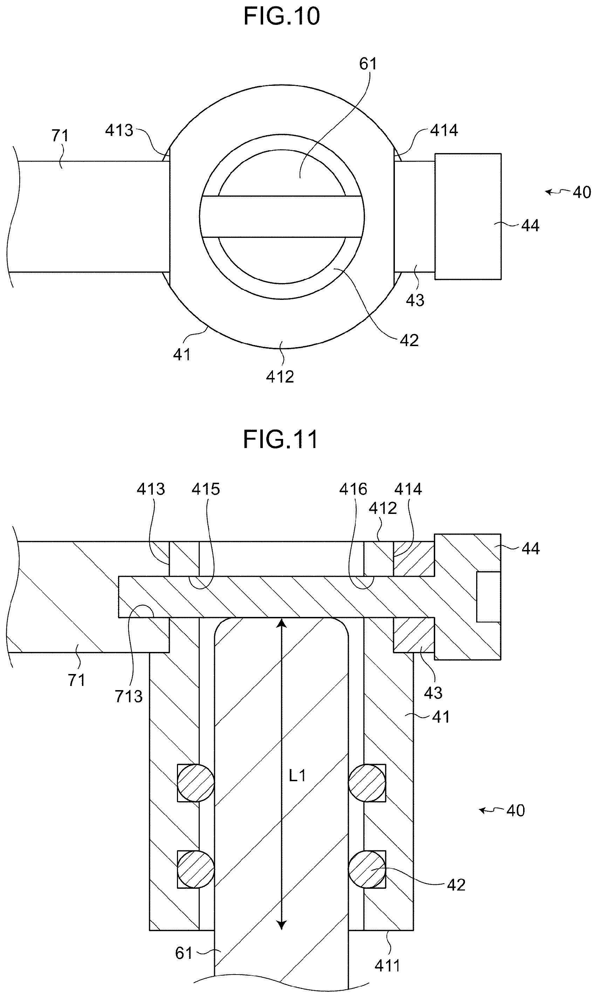

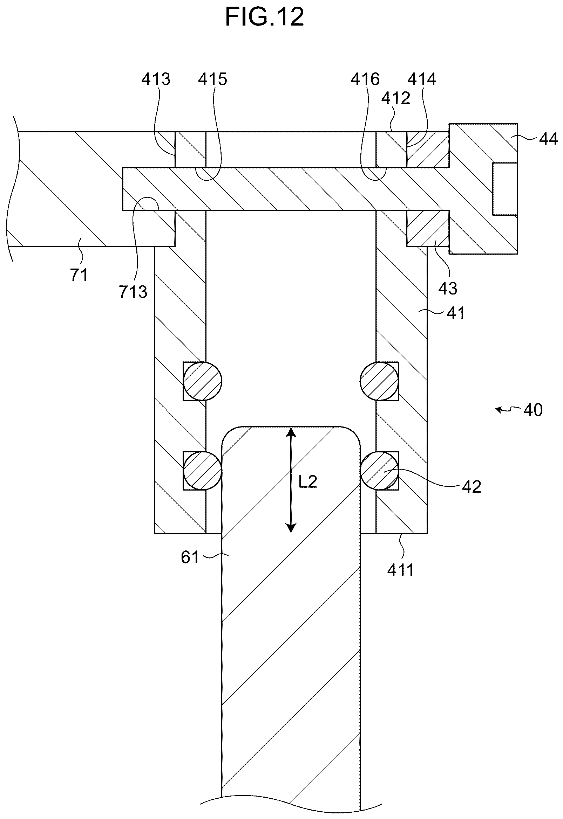

FIG. 10 is a top view of the multi-contact of the solid-insulated busbar connector according to the third embodiment. FIGs. 11 and 12 are each a cross-sectional view of the multi-contact of the solid-insulated busbar connector according to the third embodiment. The multi-contact 40 includes: a contact case 41 having a cylindrical shape to cover a corresponding one of the end portions 611 of the first center conductor 61; and a coil spring contactor 42 disposed in a groove formed on an inner circumferential surface of the contact case 41 to electrically connect the contact case 41 and the first center conductor 61 to each other. The contact case 41 has an end portion 411 on the side where the first center conductor 61 is inserted, and has an end portion 412 on a side opposite the end portion 411. An outer circumference of the end portion 412 has machined cutoffs 413 and 414 formed thereon. A corresponding one of the end faces of the second center conductor 71 is in surface contact with the machined cutoff 413. The machined cutoffs 413 and 414 have through-holes 415 and 416 formed therein. A bolt 44 is caused to penetrate through a spring washer 43 and the through-holes 415 and 416, and is then threadably fixed in the internal thread 713, thereby causing the second center conductor 71 to be fixed to the contact case 41. Note that FIG. 11 illustrates a case where the first center conductor 61 is inserted into the contact case 41 to abut on the bolt 44, while FIG. 12 illustrates a case where the first center conductor 61 is inserted into the contact case 41 to come into contact with only the coil spring contactor 42 positioned nearest to the end portion 411 on the side where the first center conductor 61 is inserted, of the contact case 41.

The insertion length of the first center conductor 61 in the contact case 41 can be arbitrarily changed within a range from an insertion length L1 in a case where the first center conductor 61 abuts on the bolt 44 as illustrated in FIG. 11 to an insertion length L2 in a case where the first center conductor 61 has come into contact with only the coil spring contactor 42 positioned nearest in the end portion 411 on the side where the first center conductor 61 is inserted, of the contact case 41 as illustrated in FIG. 12. This enables the installation heights of the tank connectors 51 and 52 with respect to the height level of the horizontal busbar 56 to be changed easily. Thus, the tanks 1a and 1b can be connected to each other with an adjustment being made on the installation heights of the tank connectors 51 and 52 with respect to the height level of the horizontal busbar 56, within an adjustable range of the multi-contact 40.

The configurations described in the foregoing embodiments are merely examples of aspects. These configurations can be combined with another known technology, and can be partly omitted and/or modified without departing from the gist.

### Reference Signs List

1a, 1b tank; 11a, 11b tank lid plate flange; 12a, 12b, 832, 921, 922 hollow portion; 13a, 13b cup-shaped insulator; 14a, 14b connecting conductor; 15 insulating grease; 16a, 16b insulator fixing flange; 17a, 17b electric field-relaxation ring shield; 19a, 19b body unit; 21 support rod; 22 pressing plate; 30 solid-insulated busbar; 40 multi-contact; 41 contact case; 42 coil spring contactor; 43 spring washer; 44 bolt; 50 solid-insulated busbar connector; 51, 52 tank connector; 53, 54 compressor; 55, 57 vertical busbar; 56 horizontal busbar; 58, 59 conductor connector; 61 first center conductor; 62, 72, 83, 92 insulation resin; 63, 73, 84, 93 sheath; 71 second center conductor; 81 third center conductor; 82, 91 conductive resin; 85, 94 fixing metal; 86, 95 screw; 87, 96 insulation cap; 88, 97 conductive cover; 141a, 141b, 221 hole; 181a, 181b, 182a, 182b, 183a, 183b O-ring; 211, 212, 411, 412, 611, 711 end portion; 214 nut; 413, 414 machined cutoff; 415, 416, 613, 851, 941 through-hole; 713, 813 internal thread; 811 one end portion; 812 another end portion; 821, 911 first cylindrical unit; 822, 912 second cylindrical unit; 823, 913 third cylindrical unit; 831 protruding-shaped portion.

## Claims

1. A solid-insulated busbar connector comprising:
a pair of tank connectors to be attached to two respective electrical devices intended to be connected to each other; and
a solid-insulated busbar disposed between the tank connectors, wherein
the solid-insulated busbar includes:
vertical busbars each comprising a first center conductor covered with an electrically insulating resin each being disposed to cause the first center conductor to extend vertically; and
a horizontal busbar comprising a second center conductor covered with an electrically insulating resin, the horizontal busbar being disposed to cause the second center conductor to extend horizontally.

2. The solid-insulated busbar connector according to claim 1, wherein
the first center conductor and the second center conductor each has a straight bar shape,
the first center conductor has an end portion formed into a rounded-corner quadrangular prism shape, and
the second center conductor has an end face abutting in surface contact with a side face of the end portion of the first center conductor.

3. The solid-insulated busbar connector according to claim 1, wherein
the solid-insulated busbar comprises a conductor connector configured to connect the first center conductor and the second center conductor to each other, and
the conductor connector is formed of an electrically conductive material.

4. The solid-insulated busbar connector according to claim 3, wherein
the conductor connector comprises
a multi-contact including:
a cylindrical contact case into which the first center conductor is inserted; and
a coil spring contactor disposed on an inner circumferential surface of the contact case and configured to electrically connect the first center conductor and the contact case to each other, wherein
the contact case has an end portion having an outer circumference on which a flat portion is formed, and
the second center conductor has an end face abutting in surface contact with the flat portion.

5. The solid-insulated busbar connector according to claim 3, wherein
the conductor connector includes a fixing metal configured to fix the first center conductor and the second center conductor to each other.

6. The solid-insulated busbar connector according to claim 5, wherein
the conductor connector includes an insulation cap configured to cover the fixing metal.

7. The solid-insulated busbar connector according to claim 1, comprising
compressors configured to press the respective tank connectors into respective tanks for the electrical devices.

8. The solid-insulated busbar connector according to any one of claims 1 to 7, wherein
the horizontal busbar is disposed at a height level above the tank connectors.

9. The solid-insulated busbar connector according to any one of claims 1 to 7, wherein
the horizontal busbar is disposed at a height level below the tank connectors.

10. An assembly method for assembling a solid-insulated busbar connector, the solid-insulated busbar connector comprising:
a pair of tank connectors to be attached to two respective electrical devices intended to be connected to each other; and
a solid-insulated busbar disposed between the tank connectors, wherein
the solid-insulated busbar comprises:
vertical busbars each comprising a first center conductor covered with an electrically insulating resin that is disposed to cause the first center conductor to extend vertically; and
a horizontal busbar including a second center conductor covered with an electrically insulating resin and disposed to cause the second center conductor to extend horizontally, the assembly method comprising
a step of coupling, from above, a portion of the solid-insulated busbar comprising at least the horizontal busbar and a conductor connector to a portion of the solid-insulated busbar other than the horizontal busbar and the conductor connector or to the tank connectors.
